# EUROPEAN PATENT APPLICATION

(11) **EP 2 927 310 A1**
(43) Date of publication of application: **07.10.2015**
(21) Application number: 14163421.2
(22) Date of filing: 03.04.2014
(51) Int. Cl.: C12M 1/12, C12M 1/22, C12M 1/26, G01N 1/22, G01N 33/497

(54) **Sampling structure for airborne microbes**

(71) Applicant: Avidicare AB, 223 81 Lund (SE)
(72) Inventor: Ekolind, Peter, 262 32 Ängelholm (SE); Skredsvik, Henrik, 262 93 Ängelholm (SE)
(74) Representative: Larsson, Malin

(57) **Abstract**

A sampling structure (100, 200, 300, 500) for sampling airborne microbes sedimenting on the sampling structure (100, 200, 300, 500) is provided. The sampling structure (100, 200, 300, 500) structurally mimics at least a three-dimensional part of an object (102) to be operatively used in a clean room environment, and wherein at least an outer surface (104) of said three-dimensional part of the object (102) comprises a growth medium. Use of such a sampling structure (100, 200, 300, 500) is further disclosed.

## Description

### TECHNICAL FIELD

The present invention relates to a sampling structure for sampling of airborne microbes, and the use of such a sampling structure.

### BACKGROUND

Clean rooms are frequently used in order to reduce problems associated with the presence of air borne contaminating particles such as dust particles and microbes. Clean rooms comprise customized ventilation systems providing a controlled airflow with clean air in at least a portion, the so called protective area, of the clean room. The clean air counteracts contamination during activity in the clean room for example during surgery or production. Although the clean air reduces the number of airborne contaminants in the air inside the protective area there may still be contaminants present. There is therefore a need to understand how these contaminants are transported by the air flows of the room and in particular to determine where the contaminants end up in the clean room.

The clean room being an operating theatre is a non-limiting example of when the presence of contaminants may pose serious health risks. In an operating theatre, contaminants such as unwanted microbes present in the clean air may land on objects such as medical devices in the protective area of the operating theatre. These microbes may cause infections, especially during a surgical treatment where the microbes may come in contact with wounds and other vulnerable areas of a patient.

To prevent infections there are recommendations to have strict aseptic practices during surgery. To this end, medical devices such as surgical instruments should be sterile, or at most only having a low microbial count when used. Appropriate cleaning, disinfection, packaging and sterilization may be ensured by using validated processes. The medical devices may therefore be free from contaminants at least when introduced in the clean room. Contaminants may, however, with time end up on the medical devices, and especially when the sterile packaging of the medical devices has been broken. Surprisingly, there are in most cases, no guidelines or recommendations on how long time medical devices and other objects may be exposed to the air in the clean room before they have to be replaced.

Further, no matter type of clean room or type of activity in the clean room, it is difficult to in an efficient way determine where the airborne microbes end up.

One way to measure this is to use an air sampler such as the so called "slit-to-agar" sampler or impactor. In a "slit-to-agar" sampler a known volume of air is drawn by vacuum through a slit opening and then accelerated and directed toward the surface of a Petri dish. The Petri dish contains a growth medium, for example in the form of an agar plate. The Petri dish is made to rotate at a selected speed by using a turntable plate. The impacted microbes may thereby be separated spatially by the plate's rotation, providing an analysis based on time. The amount of impacted microbes (often measured in colony forming units, CFU) on the agar plate are later, after an incubation time, evaluated by determining the amount of microbial growth on the plate. Information on the spatial distribution of contaminants in the clean room is, however, not provided by using this technique. Hence, the technique is not efficient in determining the presence of microbes or microorganisms on an exposed object, such as a medical instrument or a tooling, which is present in the clean room.

So called contact agar plates may be applied to obtain such information in view of exposed objects. It may, however, be shown that the information obtained is sensitive to for example the number of contact areas used for the sampling and also to the amount of pressure used during the sampling procedure. The reliability of such a method may be contested.

Alternatively, an exposed object may be soaked in a suitable solution and by using standard processes well known in the art it is possible to transfer and filter out the microbes from the solution such that the number of CFUs of the object may be determined. This is an indirect and imprecise method. Microbes may for instance remain on the exposed object such that they are not transferred from the object to the solution. This results in an underestimation of the number of microbes that was present on the object.

Hence, there is a need for a more efficient way to determine the presence of contaminants such as microbes on objects in a clean room.

### SUMMARY OF THE INVENTION

An object of the present invention is to provide an improved sampling structure for the sampling of airborne microbes sedimenting on the sampling structure.

According to a first aspect of the present invention, a sampling structure for sampling airborne microbes sedimenting on the sampling structure is provided. The sampling structure structurally mimics at least a three-dimensional part of an object to be operatively used in a clean room environment, and wherein at least an outer surface of the three-dimensional part of the object comprises a growth medium.

The sampling structure may provide an efficient tool for measuring the amount of airborne microbes that sediment on the sampling structure during a certain period of time. In other words, the growth medium of the sampling structure may, after appropriate incubation, provide viable counting of the number of airborne microbes that have sedimented on the sampling structure. The number of airborne microbes is deduced by an evaluation of the number of CFUs obtained in the growth medium after an incubation time at an appropriate temperature.

By the sampling structure structurally mimicking at least a three-dimensional part of an object to be operatively used in the clean room environment a more direct determination of where the microbes have sedimented on the sampling structure and thus on the mimicked part may be provided. Hence, the coverage of microbes on the sampling structure may efficiently be determined. This information may further assist in the development of recommendations or standards for how long time a certain object may be exposed to the air in a clean room before it may be exchanged.

The amount of growth material for forming the sampling structure may further be greatly reduced by restricting the growth medium to only an outer surface of the three-dimensional part.

Providing a sampling structure that structurally mimics at least a three-dimensional part of an object has a pedagogic function as the cleanliness of the object may be clearly visualized. The overall awareness of the cleanliness of certain objects in the clean room may thereby be improved by using the sampling structure. This also allows for elucidation and improvement of the personnel's overall behaviour in the clean room. Further, information regarding the increase of contaminants on a certain object may be investigated over time by altering the time the sampling structure is exposed to the air of the clean room.

*Sampling* is here to be understood as the act, process, or technique of selecting a small part of a population as a sample for inspection or analysis.

The wording *sedimenting* should be construed as the process of an entity such as a microbe present in the air to settle or land on a surface such as the surface of a sampling structure. Hence, the sampling structure will collect airborne microbes that settle by gravity on the sampling structure.

The wording *microbe* is throughout this text to be interpreted in its broadest sense. A microbe should be construed as any microscopic organism. It may be a single cell or a multicellular organism. The microbes include all types of prokaryotes, such as bacteria and archaea; and various forms of eukaryotes, comprising the protozoa, fungi, algae, microscopic plants, and animals such as rotifers and planarians. To this end, viruses should further be understood as microbes. The skilled person in the art understands that the microbe may be part of a plurality of microbes and that the microbes may be attached to an object such as a human skin cell when sedimenting on the sampling structure.

*Growth medium,* also referred to as culture medium or nutrient broth should be construed as a medium containing nutrients and physical growth parameters necessary for microbial growth in the medium. The growth medium may be a *solid medium.* By solid medium is meant a medium comprising a solidifying agent such that the medium is in a solid state.

The wording *clean room* refers to a room for which a high level of cleanliness is provided. As a non-limiting example, the term may refer to production clean rooms for high end production or operating theatres for high infection sensitive surgery. As further examples, the clean room may refer to a preparation room or an examination room.

The object may be a tooling, an instrument, a part of an assembly or a spare part. By changing the type of object it is possible to efficiently determine the amount of airborne microbes that sediment on a certain object. This may provide additional information as the size, geometry and/or shape of the object may influence the sedimentation on the object.

Choosing a particular object, such as a tooling which is recognized by a user of the clean room further has an improved pedagogic effect. By mimicking such an object an improved visual demonstration of the amount of airborne microbes that is sedimenting on the object may be provided. The awareness of the amount of airborne microbes that are present in the clean room and with time settles on the object may thereby be increased. The awareness of how the activity in the clean room may affect the cleanliness of certain objects in the clean room may additionally be improved.

The object may be a surgical instrument or an implant, as this provides improved awareness of the amount of airborne microbes that sediments on a particular object used for medical treatment in a clean room. By measuring the amount of airborne microbes that has sedimented on a particular object in a clean room over time knowledge may be obtained on how long a certain surgical instrument and/or an implant may be exposed to the air in the clean room before it should be used or be replaced. This knowledge is for example beneficial for developing recommendations and/or standards for preventing postoperative surgical site infections.

The sampling structure may include a base integrated with the three-dimensional part, the base comprising a growth medium. The wording *base* should be construed as an element integrated with and arranged adjacent to the three-dimensional part of the object. The base is arranged to support the three-dimensional part. A more durable sampling structure may thereby be provided. Additionally, the number of airborne microbes sedimenting beside the three-dimensional part, i.e. on the base, may be determined. Thus, the base may be used to mimic a tray.

The sampling structure may mimic at least a part of a surgical instrument tray comprising at least one surgical instrument or implant or a part thereof. This arrangement allows for the determination of the number of airborne microbes sedimenting on a mimicked surgical instrument or implant as well as besides it. In other words, the sedimentation on the surgical instrument tray may additionally be determined. This provides valuable information as surgical instruments or implants used during a surgical treatment are often displaced on the surgical instrument tray. As a result microbes that have sedimented on the surgical instrument tray may transfer to the surgical instrument or implant during for example carrying of the instrument tray or handling of the instruments.

The sampling structure may be a solid body consisting of the growth medium. The fabrication of the sampling structure may thereby be simplified as the number of materials needed to form the sampling structure may be reduced.

The growth medium may comprise agar. This is advantageous as agar is a stabile and an abundant material that makes the growth medium a solid medium. Agar further provides efficient culturing of microbes such that the amount of CFUs in the growth medium may be determined.

The growth medium may comprise gelatin.

The clean room may be an operating theatre.

The sampling structure may further comprise a carrier.

The wording *carrier* should be construed as a structure that carries or holds the sampling structure. The carrier is advantageous as it may improve the handling of the sampling structure such that damages occurring when handling the sampling structure may be mitigated. Hence a more durable and reliable sampling structure may be provided for.

The outer surface of the three-dimensional part of the object may at least partly extend above the uppermost point of the carrier. This arrangement may reduce the influence of the carrier on the sedimentation rate for the airborne microbes. In other words, the carrier's effect on the air flow in the vicinity of the outer surface of the three-dimensional part of the object may be reduced. Hence, air disturbances may be mitigated which may influence the amount of airborne microbes settling or impacting on the sampling structure.

The carrier may be arranged to interact with a lid such that the sampling structure is protected. This reduces damage and/or contamination of the sampling structure prior to and/or after the sampling of airborne microbes sedimenting on the sampling structure. A more reliable sampling structure may thereby be obtained.

According to a second aspect of the present invention the use of a sampling structure for sampling airborne microbes sedimenting on the sampling structure in a clean room environment is disclosed. The clean room may be an operating theatre or a production clean room.

It is noted that the invention relates to all possible combinations of features recited in the claims.

### BRIEF DESCRIPTION OF THE DRAWINGS

The present invention will now be described in more detail, with reference to the appended drawings showing embodiments of the invention.

As illustrated in the figures, the sizes of layers and regions are exaggerated for illustrative purposes and, thus, are provided to illustrate the general structures of embodiments of the present invention. Like reference numerals refer to like elements throughout.
FIG. 1 shows a perspective side view of a sampling structure according to an embodiment of the present invention.
FIG. 2 shows a perspective side view of a sampling structure according to an embodiment of the present invention.
FIG. 3 shows a top view of a sampling structure according to an embodiment of the present invention.
FIG. 4 illustrates a top view of the sampling structure disclosed in FIG. 3 after an incubation time.
FIG. 5 shows a side view of a sampling structure according to an embodiment of the present invention.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

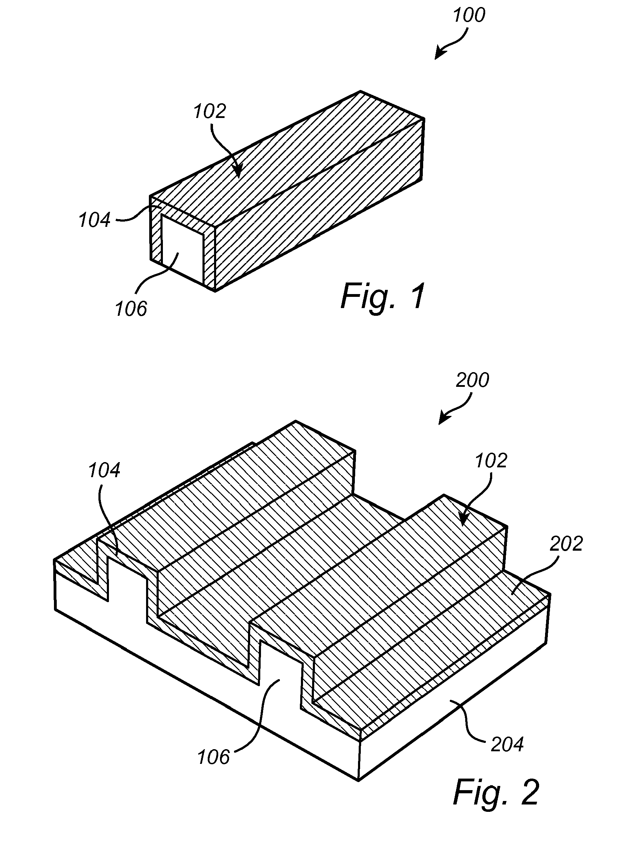

Figure 1 shows a perspective side view of an embodiment of a sampling structure 100. The sampling structure 100 is arranged for sampling airborne microbes sedimenting on the sampling structure 100. The sampling structure 100 comprises a three-dimensional part of an object 102 having an outer surface 104 comprising a growth medium.

The sample structure 100 is shaped to structurally mimic at least a three-dimensional part of an object, which for simplicity is illustrated in figure 1 as a rectangular element.

The growth medium comprises agar. Agar is an abundant material and acts as an inert solidifying agent to the growth medium. Agar thereby provides efficient culturing of microbes such that the amount of CFUs in the growth medium may easily be determined. Agar is furthermore indigestible for many organisms so that microbial growth does not affect the gel used. Agar also exhibits hysteresis, i.e. melting occurs at 85 °C while solidifying occurs from 32-40 °C. In other words, agar shows a suitable balance between easy melting and good gel stability at relatively high temperatures. This is advantageous as many applications require incubation for an extended period, typically 48 hours, at temperatures close to human body temperature (37 °C).

The growth medium may comprise trypticase soy agar TSA which is a general purpose medium, providing enough nutrients to allow for a wide variety of microbes to grow. It is used for a wide range of applications including; culture storage, enumeration (counting), isolation of pure cultures or simply general culture.

The growth medium may further comprise a mix of agar and other nutrients such that microbes, including bacteria and fungi, may be cultured effectively.

For example, the growth medium may contain enzymatic digests of casein and soybean meal which provides amino acids and other nitrogenous substances making it a nutritious medium for a variety of microorganisms. Glucose may be used as energy source. Sodium chloride maintains the osmotic equilibrium, while dipotassium phosphate acts as buffer to maintain pH.

The growth medium may further be supplemented with blood such as blood from horses to facilitate the growth of more fastidious bacteria or antimicrobial agents to permit the selection of various microbial groups from pure microbiota. It is known to the person skilled in the art that minor changes to the content of the growth medium may be made to suit specific circumstances.

Only the outer surface 104 of the three-dimensional part of the object 102 comprises a growth medium in the disclosed embodiment of figure 1. The amount of growth material needed for forming the sampling structure 100 may thereby be reduced.

The inner portion 106 of the three-dimensional part of an object 102 may be formed by a molded plastic. The inner portion 106 may be formed by overmolding the object which is to be mimicked by the sampling structure.

After sterilization of the inner portion 106, the outer surface 104 comprising the growth medium may be dispensed on the inner portion 106 using a sterile media dispenser. The person skilled in the art realizes that other methods for forming the inner portion 106 of the sampling may be used involving for instance injection molding or spraying.

The sampling structure may be freed of all microbes by sterilization, typically in an autoclave, where it undergoes heating under pressure for a specific time. The sterilization may be performed before and/or after the growth medium is dispensed on the inner portion 106.

The inner portion 106 may in other embodiments comprise latex or silicone.

The use of latex is advantageous as latex is a one-component system. Latex is further a relatively inexpensive material. Latex is an elastic mold rubber and the molds are generally thin-walled, strong and exhibit good abrasion resistance. Silicone exhibits good chemical resistance and high temperature resistance which makes silicone resistant to for example sterilization involving heating. Silicone has further good release properties providing simplified manufacturing.

The person skilled in the art understands that the inner portion 106 may in other embodiments comprise any material that may be sterilized. The inner portion 106 may for example comprise a metal.

Figure 2 illustrates a perspective side view of a sampling structure 200 according to another embodiment of the present invention. The sampling structure 200 comprises a three-dimensional part of an object 102 having an outer surface 104 comprising a growth medium and a base 202 integrated with the three-dimensional part of an object 102. The number of airborne microbes sedimenting besides the three-dimensional part, i.e. on the base 202, may thereby also be determined. The base 202 may be seen as mimicking a tray. The base 202 further supports the outer surface 104. The shape of the three-dimensional part of an object 106 may thereby be preserved more efficiently. A more durable sampling structure 200 may further be provided.

The sampling structure 200 further comprises a carrier 204. This is advantageous as it improves the stability and handling of the sampling structure 200 such that damages occurring when handling the sampling structure are mitigated. Hence a more durable and reliable sampling structure is provided for. The inner portion 106 and the carrier 204 may as illustrated in figure 2 form a single entity. In other embodiments the inner portion 106 and the carrier 204 may be separate entities put together by for example gluing.

The carrier may be a part of a dish, such as a Petri dish.

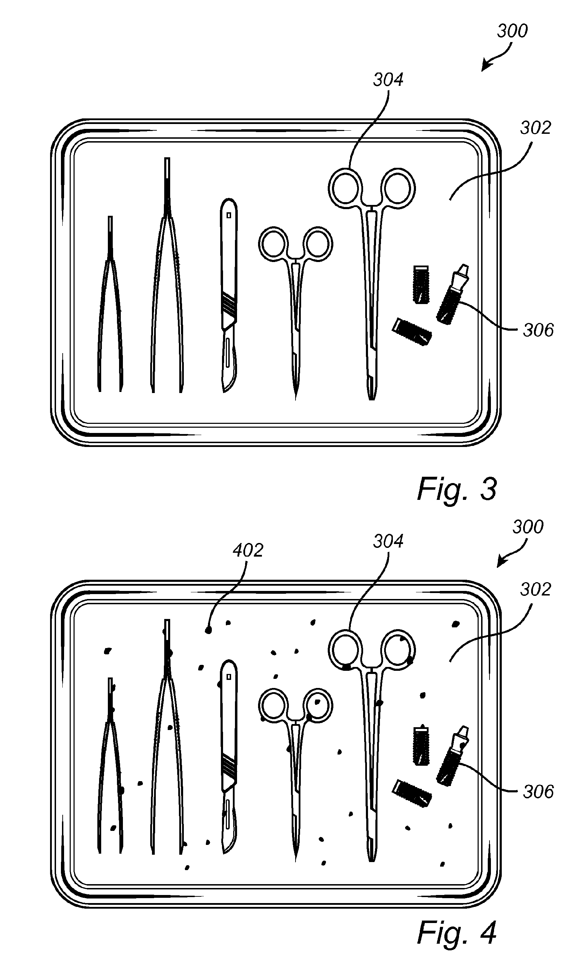

Now referring to figures 3 and 4, a sampling structure 300 mimicking a surgical instrument tray 302 comprising surgical instruments 304 and implants 306 is illustrated. This sampling structure 300 allows for the determination of the number of airborne microbes sedimenting on the mimicked surgical instruments 304 or implants 306 as well as adjacent to them, i.e. on the tray 302. The number of airborne microbes sedimenting on the sampling structure 300 may be evaluated by determining the amount of microbial growth on it after an incubation time. Figure 4 illustrates the microbial growth or CFUs 402 on the sampling structure 300 after an incubation time. The presence of distinct regions of microbes 402 facilitates visual counting of the number of CFUs using for example the naked eye, a camera or an optical microscope.

Hence, the sampling structure 300 is effective for determining the amount of sedimentation on different locations on an object or on the surgical instrument tray 302 itself. The amount of sedimentation on the tray 302 provides additional information as surgical instruments 304 or implants 306 used during a surgical treatment are often displaced on the surgical instrument tray 302. As a result, microbes that have sedimented on the surgical instrument tray 302 may transfer to the surgical instruments 304 or implants 306 during the handling of the objects on the instrument tray 302.

By having instruments 304 of different types such as tweezers and scalpels it is possible to directly determine the amount of airborne particles that sediment on a particular object. This is advantageous as the size, geometry and/or shape of the object may influence the sedimentation on the object. Choosing a particular object, such as a surgical instrument which is recognized by a user of the clean room further has an improved pedagogic effect as it allows for an improved visual demonstration of the amount of airborne microbes sedimenting on the known object. Hence, the awareness of the amount of airborne microbes that are present in the clean room may be increased and it may trigger regulations for how long time instruments or the like are allowed to be exposed to the ambient air before exchange.

The object may according to other embodiments be formed as a tooling, an instrument, a part of an assembly or a spare part.

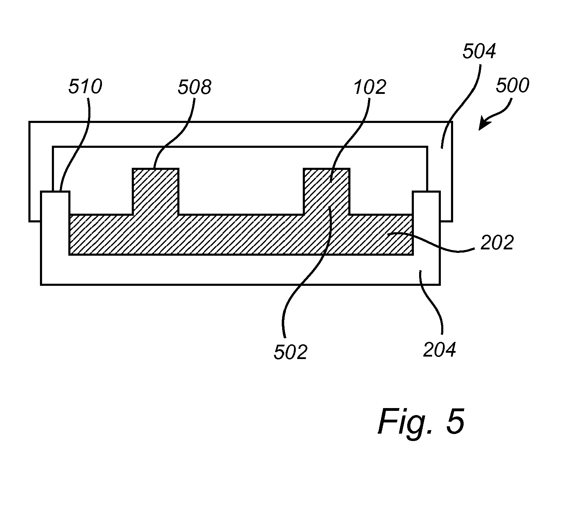

Figure 5 illustrates a sampling structure 500 which is formed as a solid body 502 of a growth medium. A base 202 is further integrated with the three-dimensional part of an object 102.

In the disclosed embodiment the sampling structure 500 comprises a carrier 204 in the form of a dish, which dish is covered by a lid 504. The dish 204 together with the lid 504 thus forms a closed and openable container.

Thus, the growth medium of the sampling structure 500 may be kept sterile when housed inside the container.

The sampling structure 500 contained in such sterile container constitutes a sampling system which can be provided as a unit off-the-shelf for costumers. The lid 504 may be reusable to allow a sterile resealing of the sampling structure after sampling. In the disclosed embodiment the dish 204 has a circumferential rim interacting with the lid. It is to be understood that other arrangements may be used.

The carrier 204 and the lid 504 are made of a plastic, but may in other embodiments comprise material such as glass, silicone or a metal. The carrier 204 and the lid 504 are preferably sterile.

The outer surface 508 of the three-dimensional part of an object 102 extend at least partly above the uppermost point 510 of the carrier 204. This arrangement reduces the influence of the carrier 204 on the sedimentation rate for the airborne microbes. In other words, the carrier's 204 effect on the air flow in the vicinity of the outer surface 508 of the three-dimensional part of an object 102 may be reduced. Hence, air disturbances are mitigated which may influence the amount of airborne microbes settling or impacting on the sampling structure 500.

The person skilled in the art realizes that the present invention by no means is limited to the preferred embodiments described above. On the contrary, many modifications and variations are possible within the scope of the appended claims.

For example, the growth medium may comprise gelatin as solidifying agent.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A sampling structure for sampling airborne microbes sedimenting on the sampling structure (100, 200, 300, 500), wherein the sampling structure (100, 200, 300, 500) structurally mimics at least a three-dimensional part of an object (102) to be operatively used in a clean room environment, and wherein at least an outer surface (104) of said three-dimensional part of the object (102) comprises a growth medium.

2. The sampling structure according to claim 1, wherein the object (102) is a tooling, an instrument, a part of an assembly or a spare part.

3. The sampling structure according to claim 1 or 2, wherein the object (102) is a surgical instrument (304) or an implant (306).

4. The sampling structure according to any of the claim 1 to 3, wherein the sampling structure (200, 500) includes a base (202) integrated with said three-dimensional part (102), the base (202) comprising a growth medium.

5. The sampling structure according to any of the claims 1 to 4, wherein the sampling structure (300) mimics at least a part of a surgical instrument tray (302) comprising at least one surgical instrument (304) or implant (306) or a part thereof.

6. The sampling structure according to any of the claims 1 to 5, wherein the sampling structure (500) is a solid body (502) consisting of the growth medium.

7. The sampling structure according to any of the claims 1 to 6, wherein the growth medium comprises agar.

8. The sampling structure according to any of the claims 1 to 6, wherein the growth medium comprises gelatin.

9. The sampling structure according to any of the claims 1 to 8, wherein the clean room is an operating theatre.

10. The sampling structure according to any of the claims 1 to 9, wherein the sampling structure further comprises (200, 500) a carrier (204).

11. The sampling structure according to claim 10, wherein the outer surface (508) of the three-dimensional part of the object (102) at least partly extends above the uppermost point (510) of the carrier (204).

12. The sampling structure according to claim 10 or 11, wherein the carrier (204) is arranged to interact with a lid (504).

13. Use of the sampling structure according to any of the claims 1 to 12, for sampling airborne microbes sedimenting on the sampling structure (100, 200, 300, 500), in a clean room environment.

14. The use of the sampling structure according to claim 13, the clean room being an operating theatre.

15. The use of the sampling structure according to claim 13, the clean room being a production clean room.
